(19) Europäisches Patentamt
European Patent Office
Office européen des brevets

(11) **EP 1 521 701 B1**

(12) **EUROPÄISCHE PATENTSCHRIFT**

(45) Veröffentlichungstag und Bekanntmachung des Hinweises auf die Patenterteilung:
**29.08.2007 Patentblatt 2007/35**

(21) Anmeldenummer: **03762608.2**

(22) Anmeldetag: **03.07.2003**

(51) Int Cl.:
**B62D 5/04** (2006.01)

(86) Internationale Anmeldenummer:
**PCT/EP2003/007107**

(87) Internationale Veröffentlichungsnummer:
**WO 2004/005111 (15.01.2004 Gazette 2004/03)**

(54) **VERFAHREN ZUM LENKEN EINES FAHRZEUGS MIT EINER ÜBERLAGERUNGSLENKUNG**

METHOD FOR STEERING A VEHICLE WITH SUPERIMPOSED STEERING

PROCEDE POUR DIRIGER UN VEHICULE AU MOYEN D'UN SYSTEME DE DIRECTION A SUPERPOSITION

(84) Benannte Vertragsstaaten:
**DE FR IT**

(30) Priorität: **05.07.2002 DE 10230265**
**25.06.2003 DE 10328752**

(43) Veröffentlichungstag der Anmeldung:
**13.04.2005 Patentblatt 2005/15**

(73) Patentinhaber: **Continental Teves AG & Co. oHG**
**60488 Frankfurt am Main (DE)**

(72) Erfinder: **BÖHM, Jürgen**
**65558 Oberneisen (DE)**

(56) Entgegenhaltungen:
**DE-A- 19 751 125**

EP 1 521 701 B1

**Beschreibung**

Die Erfindung betrifft ein Verfahren zum Lenken eines Fahrzeugs mit einem Überlagerungslenkungssystem, bei dem ein vom Fahrer eingegebener Lenkwinkel und ein weiterer Winkel (Zusatzlenkwinkel) ermittelt wird und bei dem der eingegebene Lenkwinkel durch den Zusatzlenkwinkel nach Maßgabe weiterer Größen, insbesondere fahrdynamischer Größen, mittels eines Elektromotors überlagert werden kann.

Heutige Kraftfahrzeuge, insbesondere Personenkraftwagen, sind in der Regel mit hydraulischen oder elektrohydraulischen Servolenkungen ausgestattet, bei denen ein Lenkrad mechanisch mit den lenkbaren Fahrzeugrädern zwangsgekoppelt ist. Die Servounterstützung ist derart aufgebaut, dass im Mittelbereich des Lenkmechanismus Aktuatoren, z.B. Hydraulikzylinder, angeordnet sind. Durch eine von den Aktuatoren erzeugte Kraft wird die Betätigung des Lenkmechanismus in Reaktion auf die Drehung des Lenkrads unterstützt. Dadurch ist der Kraftaufwand des Fahrers beim Lenkvorgang verringert.

Überlagerungslenkungen sind bekannt. Sie sind dadurch charakterisiert, dass dem vom Fahrer eingegebenen Lenkwinkel bei Bedarf ein weiterer Lenkwinkel (Zusatzlenkwinkel) durch einen Aktuator überlagert werden kann. Es werden üblicherweise elektrische Aktuatoren verwendet, die auf ein Überlagerungsgetriebe wirken und den Zusatzlenkwinkel weitgehend unabhängig vom Fahrer einstellen.

Der zusätzliche Lenkwinkel wird durch einen elektronischen Regler gesteuert und dient beispielsweise zur Erhöhung der Stabilität und Agilität des Fahrzeugs. Nach einem bekannten Regelungskonzept, wie es in der DE 197 51 125 A1 beschrieben wird, werden die Lenkanteile des überlagerten Lenkwinkels unabhängig von einander gebildet.

Der Erfindung liegt die Aufgabe zugrunde, ein Verfahren zum Lenken eines Fahrzeugs mit einer Überlagerungslenkung bereitzustellen, welches sicher und zuverlässig arbeitet.

Diese Aufgabe wird erfindungsgemäß dadurch gelöst, dass das Verfahren eine Lenkwinkelregelung mit unterlagerter Strom- bzw. Motormomentenregelung des Elektromotors aufweist.

Dabei wird vorzugsweise ein Soll-Strom bzw. ein Soll-Motormoment erzeugt, durch den der Elektromotor einen zusätzlichen Lenkwinkel in das Lenkungssystem einbringt. Durch den der Lenkungsbetätigung überlagerten Winkel wird der gewünschte Lenkwinkel und damit auch der von weiteren Fahrzeugregelungssystemen ggf. zusätzlich geforderte Zusatzlenkwinkel eingestellt.

Erfindungsgemäß ist es vorgesehen, dass ein Lenkwinkel-Istwert und ein Lenkwinkel-Sollwert ermittelt wird und nach Maßgabe eines Vergleichs zwischen dem Lenkwinkel-Istwert und dem Lenkwinkel-Sollwert ein Soll-Strom oder ein Soll-Motormoment erzeugt wird, durch den der Elektromotor den Zusatzlenkwinkel in das Lenkungssystem einbringt.

Eine vorteilhafte Ausgestaltung des erfindungsgemäßen Verfahrens besteht darin, dass auf Grundlage eines vom Fahrer eingestellten Lenkradwinkels $\delta_H$ ein Fahrerlenkwunsch $\delta_{DRV}$ ermittelt wird, wobei der Fahrerlenkwunsch $\delta_{DRV}$ aus dem eingestellten Lenkradwinkel $\delta_H$ sowie einem fest oder variabel vorgebbaren Getriebübersetzungsfaktor gebildet wird und der Getriebübersetzungsfaktor entsprechend der gegenwärtigen Fahrsituation, insbesondere einer erfassten Fahrzeuglängsgeschwindigkeit und/oder einem Lenkradeinschlagwinkel gewählt wird, und dass auf Grundlage des so berechneten Fahrerlenkwunsches ein Lenkwinkel-Sollwert $\delta_{Soll}$ ermittelt wird und der Lenkungsregelung zugeführt wird.

Nach einer weiteren Ausgestaltung der Erfindung ist es vorgesehen, dass der Fahrerlenkwinkel $\delta_H$ ermittelt wird und in Verbindung mit einem Übersetzungsfaktor $i_{L1}$, mit dem der Fahrerlenkwinkel direkt auf das Lenkgetriebe wirkt, additiv überlagert wird mit einem Zusatz-Lenkwinkel $\delta_M$ in Verbindung mit einer zweiten Übersetzung $i_{L2}$ und dass ein überlagerter Lenkwinkel $\delta_L$ ermittelt wird und als Istwert $\delta_L$, ist der Lenkungsregelung zugeführt wird, wobei der überlagerte Lenkwinkel $\delta_L$ ermittelt wird gemäß folgender Formel:

$$\delta_L \;\; = \;\; i_{L1}{*}\delta_H \; + \; i_{L2}{*}\delta_M$$

Es ist nach der Erfindung vorgesehen, dass eine Fahrdynamikregelung (ESP-System) mit der Lenkungsregelung zusammenwirkt und dass ein zusätzlicher fahrdynamikabhängiger Lenkwinkel $\Delta\delta$ ermittelt wird, wenn die Notwendigkeit eines stabilisierenden Eingriffs von der Fahrdynamikreglung erkannt wird.

Vorzugsweise wird der auf Grundlage eines korrigierenden Eingriffs eines Fahrdynamikreglers erzeugte zusätzliche fahrdynamikabhängige Lenkwinkel $\Delta\delta$ dem Fahrerlenkwunsch $\delta_{DRV}$ additiv überlagert.

Insbesondere bei hochdynamischen Fahrsituationen wird die Regelung der Überlagerungslenkung durch diese Ausgestaltung des erfindungsgemäßen Verfahrens verbessert.

Unter dem Begriff "hochdynamische Fahrsituation" sind alle Fahrsituationen mit einer relativ raschen Änderung der Fahrzeugrichtung und/oder der Fahrzeuggeschwindigkeit zu verstehen, die zu einer Instabilität des Fahrzeugs bzw.

der gewünschten Fahrzeugbewegung führen können. Viele Fahrer sind bei Fahrsituationen im fahrdynamischen Grenzbereich, wie Schleudermanövern, bezüglich eines angebrachten Lenkverhaltens überfordert.

Es ist nach der Erfindung vorgesehen, dass auf Grundlage der Serienlenkübersetzung $i_{L, \text{Serie}}$ und durch einen lenkradwinkelabhängigen Verstärkungsfaktor K1 und einen fahrzeuggeschwindigkeitsabhängigen Verstärkungsfaktor K2 eine resultierende Lenkübersetzung $I_{L,ESAS}$, die dem Verhältnis der gelenkten Räder $\delta_V$ zum Fahrerlenkwinkel $\delta_H$ entspricht, ermittelt wird nach folgender Formel:

$$i_{L,ESAS} = \delta_V/\delta_H = i_{L,serie} / (K1*K2)$$

Erfindungsgemäß ist es vorgesehen, dass eine Vorsteuerung der Sollgeschwindigkeit des Motors $\omega_{M,soll}$ vorgenommen wird, die aus einer Motordrehzahl-Vorgabe $\omega_{M,vor}$ und einer Motordrehzahl-Sollvorgabe $\omega_{M,reg}$ ermittelt wird, wobei die Motordrehzahl-Sollvorgabe $\omega_{M,reg}$ auf Grundlage eines Vergleichs eines Lenkwinkel-Sollwerts $\delta_{L,soll}$ mit einem ermittelten Lenkwinkel-Istwerts $\delta_{L,ist}$ ermittelt wird und die Motordrehzahl-Vorgabe $\omega_{M,vor}$ aus der zeitlichen Ableitung des Lenkwinkel-Sollwerts $\delta_{L,soll}$ und des Fahrerlenkwinkels $\delta_H$ sowie einem Übersetzungsfaktor $i_{L2}$ durch folgende Formel ermittelt wird:

$$\omega_{M,vor} = (\dot{\delta}_{L,soll} - i_{L1}\dot{\delta}_H) / i_{L2}$$

Erfindungsgemäß wird die Regelung des Motors der Überlagerungslenkung durch ein Computerprogramm realisiert, das geeignete Programmschritte für die Durchführung des beschriebenen Verfahrens aufweist.

Die Aufgabe wird auch durch eine Lenkung für ein Fahrzeug gelöst, mit einem an einer Lenksäule angeordneten Lenkrad, mit einem Lenkgetriebe, einem an der Lenksäule angeordneten Drehwinkelsensor, einem über ein Überlagerungsgetriebe auf die Lenksäule wirkenden Überlagerungsmotor, einem elektrischen Lenksteller, einem Sensor zur Messung der Stellung der gelenkten Räder und mit einem Lenkungs-Steuergerät, bei welcher Lenkung das Lenkungs-Steuergerät Mittel zur Durchführung des zuvor beschriebenen Verfahrens nach der Erfindung aufweist.

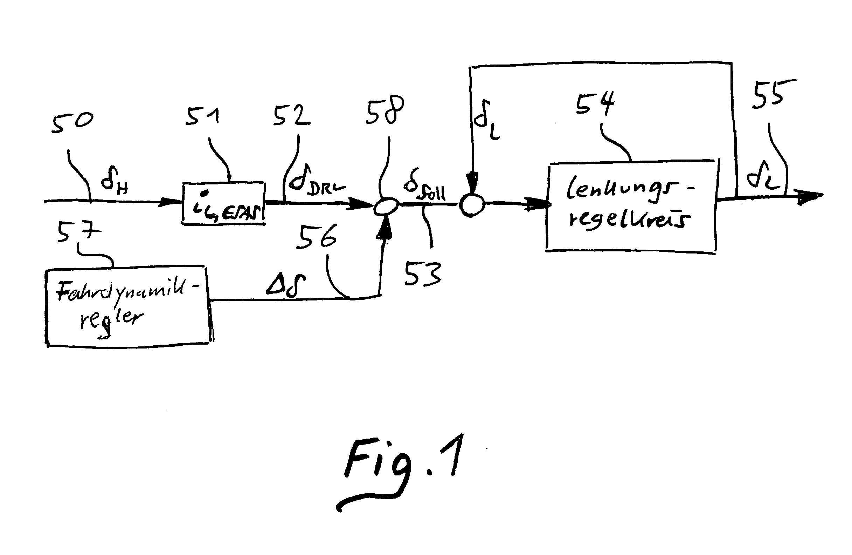

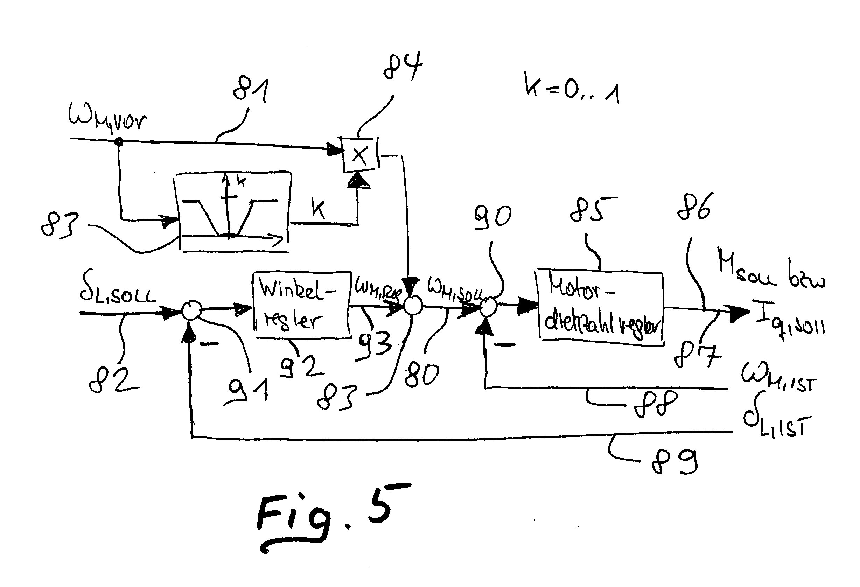

Ausführungsbeispiele des erfindungsgemäßen Verfahrens sind in Abbildungen (Fig. 1 und Fig.5) dargestellt und nachfolgend beschrieben.

Es zeigen:

Fig.1 ein Blockschaltbild der Grundstruktur des erfindungsgemäßen Verfahrens,

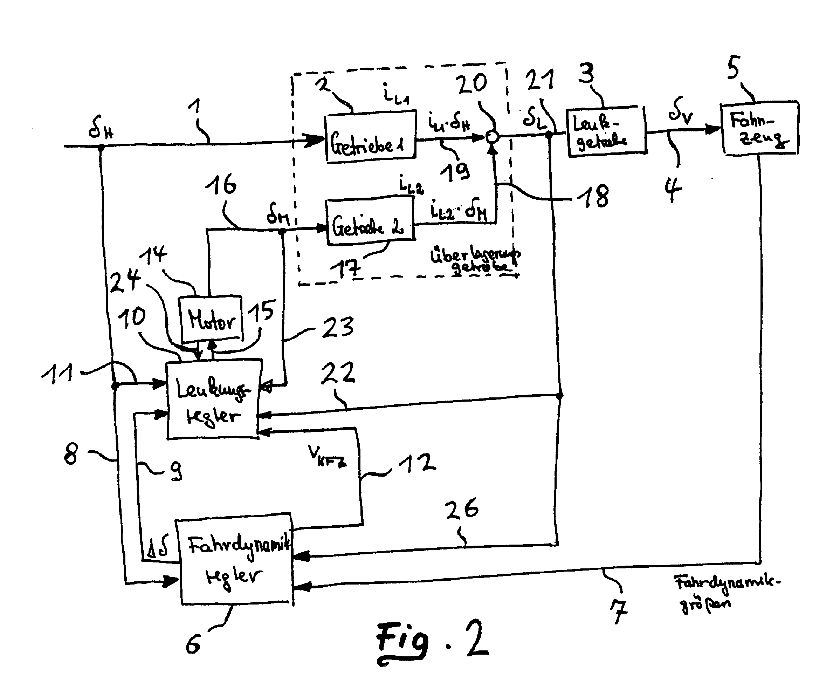

Fig.2 ein Blockschaltbild der Struktur des erfindungsgemäßen Verfahrens, und

Fig.3 ein Blockschaltbild für die erfindungsgemäße Ermittlung eines Sollwerts und eines Istwerts als Eingangsgrößen der Lenkwinkelregelung,

Fig.4 ein Blockschaltbild für die erfindungsgemäße Ermittlung eines Sollwerts und eines Istwerts als Eingangsgrößen der Lenkwinkelregelung,

Fig.5 ein Blockschaltbild für die erfindungsgemäße Ermittlung einer Motormomentenvorgabe für den Elektromotor zur Einstellung des Überlagerungswinkels, und

Fig.6 ein Blockschaltbild für die erfindungsgemäße Ermittlung eines Feldschwächestroms und eines Sollstroms zur Ansteuerung des Elektromotors.

Die Grundstruktur des erfindungsgemäßen Verfahrens ist in Fig.1 schematisch dargestellt.

Bei der Grundlenkfunktion wird aufgrund des vom Fahrer eingestellten Lenkradwinkels $\delta_H$ 50 über eine feste oder variabel vorgebbare Getriebeübersetzung $i_{L,ESAS}$ 51 der Fahrerlenkwunsch $\delta_{DRV}$ 52 als Lenkwinkel-Sollwert 53 $\delta_{L,soll}$ (Eingangsgröße) für den Lenkungsregelkreis 54 berechnet. Die Grundlenkfunktion beinhaltet dabei im wesentlichen die Wahl einer der gegenwärtigen Fahrsituation, z.B. der erfassten Fahrzeuglängsgeschwindigkeit, entsprechenden Lenkübersetzung $i_{L,ESAS}$. Der Aktuator der Lenkung wird dann entsprechend einem Lenkwinkel $\delta_L$ 55 (Ausgangsgröße des Regelkreises 54), angesteuert.

Durch eine -im Grundsatz fahrerwunschunabhängige- Anpassung der Stellung der gelenkten Räder kann die Fahrstabilität einerseits als auch die Agilität des Fahrzeugs erhöht werden. Dazu wird dem Fahrerlenkwunsch $\delta_{DRV}$ 52 ein zusätzlicher fahrdynamikabhängiger Lenkwinkel $\Delta\delta$ 56 auf Grundlage eines korrigierenden Eingriffs eines Fahrdynamikreglers 57 additiv überlagert 58. Als Ergebnis entsteht der Lenkwinkel-Sollwert $\delta_{L,Soll}$.

Die Struktur des Verfahrens zeigt Bild 2. Beim Überlagerungsgetriebe wirkt der Fahrerlenkwinkel $\delta_H$ als Eingangsgröße 1 über ein mechanisches Getriebe 2 mit einem Übersetzungsfaktor $i_{L1}$ direkt auf das Lenkgetriebe 3 ($i_{L1}*\delta_H$) 19. Der von einem Motor eingestellte Zusatzlenkwinkel $\delta_M$ 16 wirkt über ein zweites Getriebe 17 mit einem Übersetzungsfaktor $i_{L2}$ und wird dem übersetzten Fahrerlenkwinkel additiv überlagert:

$$\delta_L \;=\; i_{L1}*\delta_H \;+\; i_{L2}*\delta_M$$

Als Ausgangsgröße wird durch das Lenkgetriebe 3 ein resultierender Lenkwinkel $\delta_V$ erzeugt, der auf das Fahrzeug einwirkt.

Die Fahrdynamik des Fahrzeugs 5, insbesondere das Giermoment um die Hochachse des Fahrzeugs 5 sowie die Querbeschleunigung, werden ermittelt. Die fahrdynamischen Größen 7 und der Fahrerlenkwinkel $\delta_H$ 8 werden einem Fahrdynamikregler 6 als Eingangsgrößen zugeführt. Fahrdynamische Lenkeingriffe werden von dem Fahrdynamikregler 6 als ein Zusatzlenkwinkel $\Delta\delta$ 9 einem Lenkungsregler 10 als Eingangsgröße zugeführt. Ebenso wird dem Lenkungsregler 10 der Fahrerlenkwinkel $\delta_H$ 11 und ein Wert für die aktuelle Fahrzeuggeschwindigkeit 12, insbesondere die Fahrzeugreferenzgeschwindigkeit aus dem Fahrdynamikregler 6 oder einem ABS-Regler, als Eingangsgröße zugeführt. Der Lenkungsregler 10 steuert den Aktuator 14 der Überlagerungslenkungsfunktion an 15.

Der Aktuator, insbesondere ein Elektromotor 14, erzeugt einen zusätzlichen Lenkwinkel $\delta_M$, der über ein Getriebe 17 mit einem Übersetzungsfaktor $i_{L2}$ auf das Lenkgetriebe 3 ($i_{L2}*\delta_M$) wirkt 18. Das Getriebe 2 und Getriebe 17 sind hier nur zur Veranschaulichung als zwei einzelne "Getriebe" dargestellt. Die zwei Übersetzungen der Getriebe 2 und 17 werden aber vorzugsweise durch eine einzige Getriebeeinheit, insbesondere ein Planetenradgetriebe, realisiert.

Wie bereits Fig. 1 zu entnehmen ist, wird der als externer Stelleingriff des Fahrdynamikreglers 6 zu betrachtende Zusatzlenkwinkel $\Delta\delta$ dem Soll-Lenkwinkel $\delta_{DRV}$ der Grundlenkfunktion additiv überlagert 58. Der aus dieser Addition resultierende Lenkwinkel-Sollwert $\delta_{L,soll}$ wird der Regelung der Überlagerungslenkung zugeführt.

Aus der additiven Überlagerung vom Fahrerlenkwinkel und vom Aktuator aufgebrachten überlagerten Lenkwinkel resultiert ein Summenlenkwinkel $\delta_L$ 21, aus dem als resultierende Ausgangsgröße durch das Lenkgetriebe 3 ein resultierender Lenkwinkel $\delta_V$ erzeugt wird, der auf das Fahrzeug entsprechend der gewünschten Lenkfunktion einwirkt.

Der resultierende Lenkwinkel $\delta_L$ 21 wird dem Lenkungsregler 10 als Eingangsgröße zur Verfügung gestellt 22, ebenso der zusätzliche Lenkwinkel $\delta_M$ 23. Auch dem Fahrdynamikregler 6 wird der resultierende Lenkwinkel $\delta_L$ als Eingangsgröße zur Verfügung gestellt 26. Auch Signale oder gemessene Größen der Aktuatorik, des Elektromotors 14, werden dem Lenkungsregler 10 zugeführt 24.

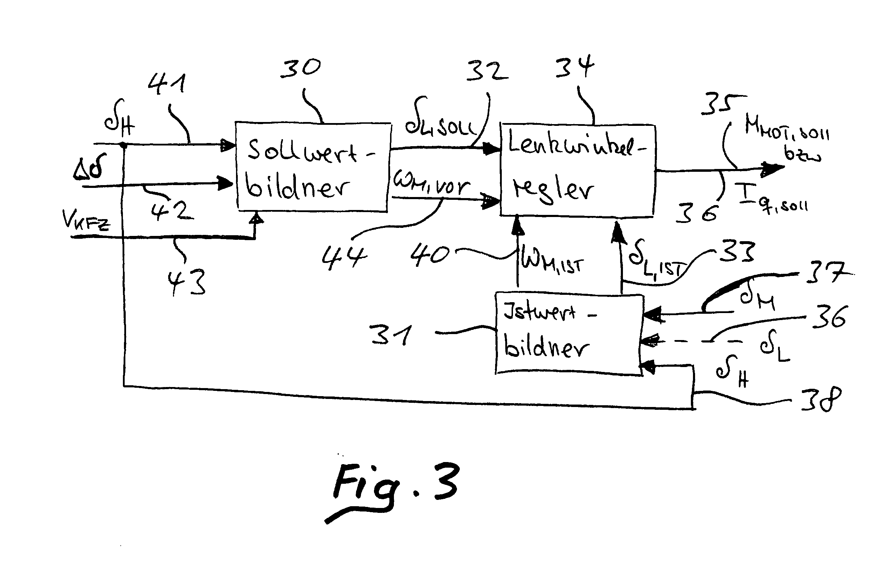

Fig.3 zeigt die Bestimmung des Lenkwinkel-Sollwerts $\delta_{L,soll}$ und bei Bedarf einer Motordrehzahl-Vorgabe $\omega_{M,vor}$ 44 in einem Sollwertbildner 30 sowie die Bestimmung des Istwerts $\delta_{L,ist}$ in einem Istwert-Bildner 31, die als Eingangsgrößen 32,33 des hier betrachteten Lenkungsreglers 34 dienen. Aus Ausgangsgrößen wird ein einzustellendes Motormomentes $M_{mot,soll}$ 35 bzw. ein momentenbildender Motorstromes $I_{q,soll}$ erzeugt. Diese Größen sind, ebenso wie eine Kommutierung des Motors (im Falle einer elektronischen Kommutierung) dem Elektromotor zugeordnet.

Regelgröße des Lenkungsreglers 34 ist dabei der Lenkwinkel $\delta_L$, der entweder direkt gemessen wird und dem Istwert-Bildner 31 zugeführt wird 36, oder der mit Hilfe des Motorwinkels $\delta_M$ 37 und des Fahrerlenkwinkels $\delta_H$ 38 unter Berücksichtigung der Übersetzungsverhältnisse des Überlagerungsgetriebes im Istwert-Bildner 31 berechnet werden kann. Als interne Regelgröße wird die Motordrehzahl $\omega_{M,ist}$ 40 benutzt, welche sich aus dem gemessenen Motorwinkel durch Differentiation berechnen lässt.

Dem Sollwert-Bildner werden ebenfalls der Fahrerlenkwinkels $\delta_H$ 41 sowie der Zusatzlenkwinkel $\Delta\delta$ 42 und die Fahrzeuggeschwindigkeit $V_{KFZ}$ 43 zugeführt.

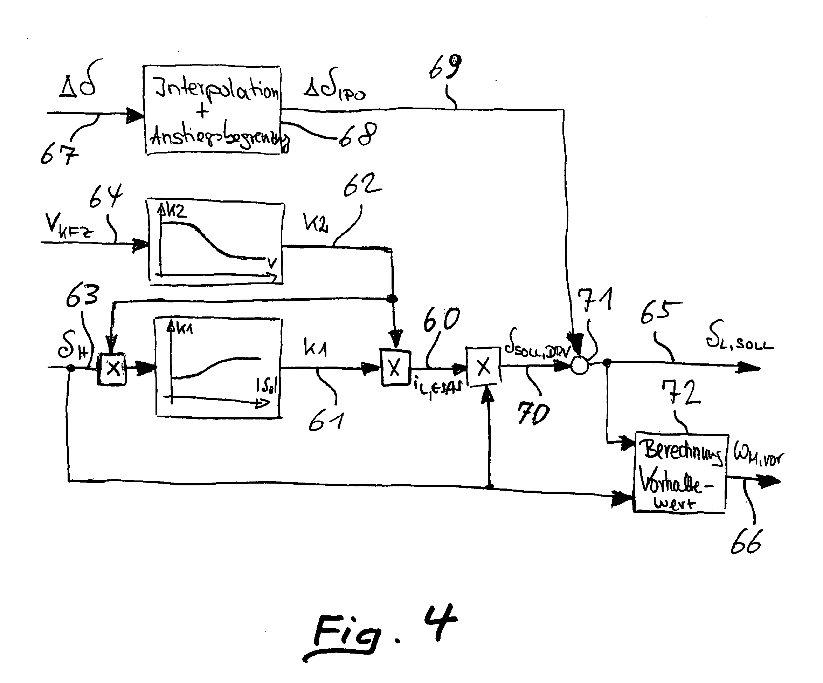

Fig.4 zeigt die Bestimmung des Lenkwinkel-Sollwertes $\delta_{L,soll}$ 32 genauer.

Die resultierende Lenkübersetzung $i_{L,ESAS}$ 60 entspricht dem Verhältnis aus dem Winkel der gelenkten Räder (Radeinschlagwinkel) $\delta_V$ zum Fahrerlenkwinkel $\delta_H$. Sie ergibt sich durch zwei Verstärkungsfaktoren K1 61 und K2 62, die multiplikativ mit der Serienlenkübersetzung $i_{L,serie}$ verknüpft sind durch folgende Formel:

$$i_{L,ESAS} \;=\; \delta_V/\delta_H \;=\; i_{L,serie}/(K1*K2)$$

Die Verstärkungsfaktoren repräsentieren dabei einen lenkradwinkelabhängigen 63 Anteil K1 und einen fahrzeuggeschwindigkeitsabhängigen 64 Anteil K2. Sie können frei nach fahrdynamischen Gesichtspunkten bzw. nach Fahrervorgaben gewählt werden. Zur Berechnung des Lenkwinkel-Sollwerts $\delta_{L,soll}$ und der Motordrehzahl-Vorgabe $\omega_{M,vor}$ 66 wird ebenso der Zusatzlenkwinkel $\Delta\delta$ 67 berücksichtigt und nach einer Interpolation und Anstiegsbegrenzung 68 ein korrigierter Zusatzlenkwinkel $\Delta\delta_{IPO}$ 69 dem Fahrerwunsch $\delta_{soll, DRV}$ 70 überlagert 71.

Die Motordrehzahl-Vorgabe $\omega_{M, vor}$ 66 wird aus der zeitlichen Ableitung des Lenkwinkel-Sollwerts $\delta_{L, soll}$ und des Fahrerlenkwinkels $\delta_H$ durch folgende Formel berechnet 72:

$$\omega_{M,vor} = (\dot\delta_{L,soll} - i_{L1}\dot\delta_{H}) / i_{L2}$$

Fig.5 zeigt die Lenkwinkelregelung genauer. Diese ist von der Grundstruktur eine Kaskadenregelung. Zur Erhöhung der Regelkreisdynamik wird eine Vorsteuerung der Sollgeschwindigkeit des Motors vorgenommen. Die Sollgeschwindigkeit $\omega_{M,soll}$ wird dabei aus der Motordrehzahl-Vorgabe $\omega_{M,vor}$ 81 und der Motordrehzahl-Sollvorgabe $\omega_{M,reg}$ 93, die als Ausgangsgröße des Winkelreglers aufgrund des Vergleichs des Lenkwinkel- Sollwerts $\delta_{L,soll}$ mit dem ermittelten Lenkwinkel-Istwerts $\delta_{L,ist}$ ermittelt wird, gebildet 83. Damit der Lenkkomfort besonders bei langsamen Lenkbewegungen nicht durch die Vorsteuerung beeinträchtigt wird, findet eine Gewichtung des Vorsteuerwertes abhängig von der gewünschten Motorgeschwindigkeit statt 83,84.

Aus der Sollgeschwindigkeit $\omega_{M, soll}$ 80 und dem Vergleich mit der ermittelten Motor-Istgeschwindigkeit $\omega_{M, ist}$ 88 wird durch einen Motordrehzahlregler 85 das Motor-Sollmoment $M_{mot,soll}$ 86 bzw. ein momentenbildender Motor-Sollstrom $I_{q,soll}$ 87 erzeugt, mit dem der Motor angesteuert werden soll.

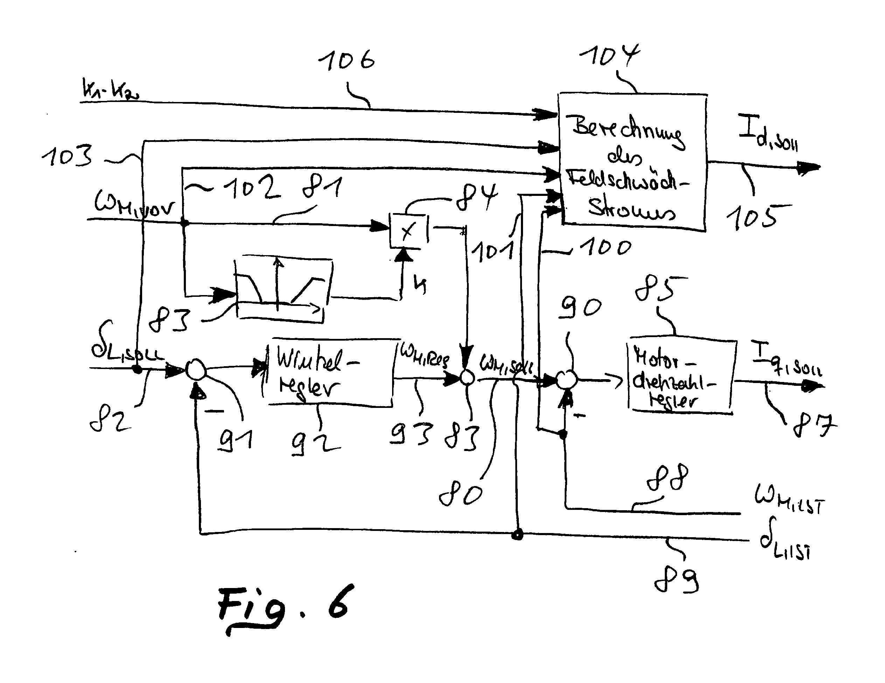

In bestimmten Betriebsfällen kann eine größere Motordrehzahl als verfügbar erforderlich werden. In diesem Fall kann durch den Einsatz einer Feldschwächung eine bedarfsabhängige, kurzzeitige Erhöhung der Motordrehzahl ohne Reduktion des verfügbaren Motormoments erreicht werden. Damit verbunden ist eine kurzzeitige Erhöhung der Stromaufnahme. Als Bedarfsfall ist insbesondere das Vorliegen einer sehr direkten Lenkübersetzung sowie eine große Sollgeschwindigkeit seitens des Fahrers oder des Fahrdynamikregelsystems anzusehen. Die resultierende Reglerstruktur stellt eine Erweiterung der in Fig.5 gezeigten Struktur dar und ist in Fig.6 abgebildet. Die bezüglich Fig.5 gleichen Schritte und Elemente sind daher mit denselben Bezugszeichen versehen und werden im folgenden nicht näher erläutert.

Anhand des gegenwärtigen Istzustandes der Lenkung, d.h. anliegende Motor-Istgeschwindigkeit $\omega_{M,ist}$ 100 und der anliegende Lenkwinkel-Wert $\delta_{L,ist}$ 101, sowie des gewünschten Sollzustandes, d.h. Motordrehzahl-Vorgabe $\omega_{L,vor}$ 102 und Lenkwinkel-Sollwerts $\delta_{L,soll}$ 103 und der Verstärkungsfaktoren der Lenkübersetzung 106 wird über den Einsatz der Feldschwächung und die Höhe des Feldschwächstromes entschieden 104. Ist keine Feldschwächung des Motors erforderlich, dann ist der resultierende Feldschwächstrom $I_{d,soll}$ 105 Null, d.h. 0 A. Neben dem momentenbildenden Strom Iq 87 muss dann die Momentenregelung des elektronisch kommutierten Motors zusätzlich den feldschwächenden Stromwert Id einregeln.

**Patentansprüche**

1. Verfahren zum Lenken eines Fahrzeugs mit einem Überlagerungslenkungssystem, bei dem ein vom Fahrer eingegebener Lenkwinkel und ein weiterer Winkel (Zusatzlenkwinkel) ermittelt wird und bei dem der eingegebene Lenkwinkel durch den Zusatzlenkwinkel nach Maßgabe weiterer Größen, insbesondere fahrdynamischer Größen, mittels eines Elektromotors überlagert werden kann,
**dadurch gekennzeichnet, dass** das Verfahren eine Lenkwinkelregelung mit unterlagerter Strom- bzw. Motormomentenregelung des Elektromotors aufweist.

2. Verfahren nach Anspruch 1,
**dadurch gekennzeichnet, dass** ein Lenkwinkel-Istwert und ein Lenkwinkel-Sollwert ermittelt wird und nach Maßgabe eines Vergleichs zwischen dem Lenkwinkel-Istwert und dem Lenkwinkel-Sollwert ein Soll-Strom oder ein Soll-Motormoment erzeugt wird, durch den der Elektromotor den Zusatzlenkwinkel in das Lenkungssystem einbringt.

3. Verfahren nach Anspruch 1 oder 2,
**dadurch gekennzeichnet, dass** auf Grundlage eines vom Fahrer eingestellten Lenkradwinkels $\delta_H$ 50 ein Fahrerlenkwunsch $\delta_{DRV}$ 52 ermittelt wird, wobei der Fahrerlenkwunsch $\delta_{DRV}$ 52 aus dem eingestellten Lenkradwinkel $\delta_H$ 50 sowie einem fest oder variabel vorgebbaren Getriebeübersetzungsfaktor gebildet wird und der Getriebeübersetzungsfaktor entsprechend der gegenwärtigen Fahrsituation, insbesondere einer erfassten Fahrzeuglängsgeschwindigkeit und/oder einem Lenkradeinschlagwinkel gewählt wird, und dass auf Grundlage des so berechneten Fahrerlenkwunsches ein Lenkwinkel-Sollwert 53 $\delta_{soll}$ ermittelt wird und der Lenkungsregelung zugeführt wird.

4. Verfahren nach einem der Ansprüche 1 bis 3,
   **dadurch gekennzeichnet, dass** der Fahrerlenkwinkel $\delta_H$ ermittelt wird und in Verbindung mit einem Übersetzungsfaktor $i_{L1}$, mit dem der Fahrerlenkwinkel direkt auf das Lenkgetriebe wirkt, additiv überlagert wird mit einem Zusatz-Lenkwinkel $\delta_M$ in Verbindung mit einer zweiten Übersetzung $i_{L2}$ und dass ein überlagerter Lenkwinkel $\delta_L$ ermittelt wird und als Istwert $\delta_{L, ist}$ der Lenkungsregelung zugeführt wird, wobei der überlagerte Lenkwinkel $\delta_L$ ermittelt wird gemäß folgender Formel:

$$\delta_L = i_{L1}*\delta_H + i_{L2}*\delta_M$$

5. Verfahren nach einem der Ansprüche 1 bis 4,
   **dadurch gekennzeichnet, dass** eine Fahrdynamikregelung (ESP-System) mit der Lenkungsregelung zusammenwirkt und dass wenn die Notwendigkeit eines stabilisierenden Eingriffs von der Fahrdynamikreglung erkannt wird ein zusätzlicher fahrdynamikabhängiger Lenkwinkel $\Delta\delta$ 56, ermittelt wird.

6. Verfahren nach Anspruch 5,
   **dadurch gekennzeichnet, dass** der auf Grundlage eines korrigierenden Eingriffs eines Fahrdynamikreglers 57 erzeugte zusätzliche fahrdynamikabhängige Lenkwinkel $\Delta\delta$ 56 dem Fahrerlenkwunsch $\delta_{DRV}$ 52 additiv überlagert wird.

7. Verfahren nach einem der Ansprüche 1 bis 6,
   **dadurch gekennzeichnet, dass** der Elektromotor nach Maßgabe weiterer Größen zusätzlich mit einem Feldschwächstrom angesteuert wird, zwecks Erhöhung der Motordrehzahl ohne Reduktion des verfügbaren Motormoments.

8. Verfahren nach Anspruch 7,
   **dadurch gekennzeichnet, dass** der Elektromotor zusätzlich mit einem Feldschwächstrom angesteuert wird, wenn eine sehr direkte Lenkübersetzung und/oder eine große Sollgeschwindigkeit gewünscht oder erforderlich ist.

9. Verfahren nach einem der Ansprüche 1 bis 8,
   **dadurch gekennzeichnet, dass** auf Grundlage der Serienlenkübersetzung $i_{L, Serie}$ und durch einen lenkradwinkelabhängigen Verstärkungsfaktor K1 und einen fahrzeuggeschwindigkeitsabhängigen Verstärkungsfaktor K2 eine resultierende Lenkübersetzung $I_{L,ESAS}$, die dem Verhältnis der gelenkten Räder $\delta_V$ zum Fahrerlenkwinkel $\delta_H$ ent-spricht, ermittelt wird nach folgender Formel:

$$i_{L,ESAS} = \delta_V/\delta_H = i_{L,serie} / (K1*K2)$$

10. Verfahren nach einem der Ansprüche 1 bis 9,
    **dadurch gekennzeichnet, dass** eine Vorsteuerung der Sollgeschwindigkeit des Motors $\omega_{M,soll}$ vorgenommen wird, die aus einer Motordrehzahl-Vorgabe $\omega_{M,vor}$ und einer Motordrehzahl-Sollvorgabe $\omega_{M,reg}$ ermittelt wird, wobei die Motordrehzahl-Sollvorgabe $\omega_{M,reg}$ auf Grundlage eines Vergleichs eines Lenkwinkel-Sollwerts $\delta_{L,soll}$ mit einem ermittelten Lenkwinkel-Istwerts $\delta_{L,ist}$ ermittelt wird und die Motordrehzahl-Vorgabe $\omega_{M,vor}$ aus der zeitlichen Ableitung des Lenkwinkel-Sollwerts $\delta_{L,soll}$ und des Fahrerlenkwinkels $\delta_H$ sowie einem Übersetzungsfaktor $i_{L2}$ durch folgende Formel ermittelt wird:

$$\omega_{M,vor} = (\dot{\delta}_{L,soll} - i_{L1}\dot{\delta}_H) / i_{L2}$$

11. Computerprogramm, **dadurch gekennzeichnet, dass** es zur Durchführung eines Verfahrens nach einem der vorstehenden Ansprüche geeignet ist.

12. Lenkung für ein Fahrzeug mit einem an einer Lenksäule angeordneten Lenkrad, mit einem Lenkgetriebe, einem an der Lenksäule angeordneten Drehwinkelsensor, einem über ein Überlagerungsgetriebe auf die Lenksäule wirkenden Überlagerungsmotor, einem elektrischen Lenksteller, einem Sensor zur Messung der Stellung der gelenkten Räder und mit einem Lenkungs-Steuergerät,
**dadurch gekennzeichnet, dass** das Lenkungs-Steuergerät Mittel aufweist zur Durchführung des Verfahrens nach einem der vorherigen Ansprüche.

**Claims**

1. Method of steering a vehicle with a superimposed steering system, wherein a steering angle input by the driver and an additional angle (additional steering angle) is determined and wherein the additional steering angle can override the input steering angle according to further quantities, in particular driving-dynamics quantities, by means of an electric motor,
**characterized in that** the method includes a steering angle control with a subordinated current or torque control of the electric motor.

2. Method as claimed in claim 1,
**characterized in that** an actual steering angle value and a nominal steering angle value is determined and, according to a comparison between the actual steering angle value and the nominal steering angle value, a nominal current or a nominal motor torque is produced by which the electric motor introduces the additional steering angle into the steering system.

3. Method as claimed in claim 1 or 2,
**characterized in that** a steering request of the driver $\delta_{DRV}$ 52 is determined on the basis of a steering wheel angle $\delta_H$ 50 adjusted by the driver, and the driver's steering request $\delta_{DRV}$ 52 is composed of the adjusted steering wheel angle $\delta_H$ 50 and an invariably or variably predeterminable gear ratio factor, and the gear ratio factor is chosen corresponding to the current driving situation, in particular a detected longitudinal vehicle speed and/or a steering wheel turning angle, and **in that** a nominal steering angle value 53 $\delta_{nominal}$ is determined on the basis of the so calculated steering request of the driver and sent to the steering control.

4. Method as claimed in any one of claims 1 to 3,
**characterized in that** the driver's steering angle $\delta_H$ is determined and, in connection with a gear ratio factor $i_{L1}$ by which the driver's steering angle acts directly on the steering gear, an additional steering angle $\delta_M$ is additively superimposed thereon in connection with a second gear ratio $i_{L2}$, and **in that** a superimposed steering angle $\delta_L$ is determined and sent as an actual value $\delta_{L,actual}$ to the steering control, with said superimposed steering angle $\delta_L$ being determined according to the following formula:

$$\delta_L \;=\; i_{L1}*\delta_H \;+\; i_{L2}*\delta_M.$$

5. Method as claimed in any one of claims 1 to 4,
**characterized in that** a driving dynamics control (ESP system) cooperates with the steering control, and **in that** an additional steering angle $\Delta\delta$ 56 responsive to driving dynamics is determined when the necessity of a stabilizing intervention is detected by driving dynamics control.

6. Method as claimed in claim 5,
**characterized in that** the additional steering angle $\Delta\delta$ 56 responsive to driving dynamics, which is produced on the basis of a correcting intervention of a driving dynamics controller 57, is additively superimposed on the driver's steering request $\delta_{DRV}$ 52.

7. Method as claimed in any one of claims 1 to 6,
**characterized in that** the electric motor is additionally actuated by means of a field weakening current according to further quantities, with a view to increasing the motor speed without reduction of the available motor torque.

8. Method as claimed in claim 7,
**characterized in that** the electric motor is additionally actuated by means of a field weakening current when a very direct steering ratio and/or a high nominal speed is desired or required.

9. Method as claimed in any one of claims 1 to 8,
**characterized in that** based on the series steering ratio $i_{L,series}$ and due to a boosting factor K1 responsive to a steering wheel angle and a boosting factor K2 responsive to the vehicle speed, a resulting steering ratio $I_{L,ESAS}$ which corresponds to the ratio between the steered wheels $\delta_V$ and the driver's steering angle $\delta_H$ is determined according to the following formula:

$$i_{L,ESAS} = \delta_V/\delta_H = i_{L,series} / (K1*K2).$$

10. Method as claimed in any one of claims 1 to 9,
**characterized in that** an anticipatory control of the nominal speed of the motor $\omega_{M,nominal}$ is executed, which is determined from a motor speed specification $\omega_{M,spec}$ and a motor speed preset value $\omega_{M,reg}$, and the motor speed preset value $\omega_{M,reg}$ is determined on the basis of a comparison between a nominal steering angle value $\delta_{L,nominal}$ and a determined actual steering angle value $\delta_{L,actual}$, and the motor speed specification $\omega_{M,spec}$ is determined from the time derivative of the nominal steering angle value $\delta_{L,nominal}$ and the driver's steering angle $\delta_H$ and a gear ratio factor $i_{L2}$ by means of the following formula:

$$\omega_{M,spec} = (\dot{\delta}_{L,nominal} - i_{L1}\dot{\delta}_H) / i_{L2}.$$

11. Computer program,
**characterized in that** it is suitable for implementing a method as claimed in any one of the preceding claims.

12. Steering system for a vehicle, comprising a steering wheel arranged at a steering column, a steering gear, a steering angle sensor arranged at the steering column, an overriding motor that acts on the steering column by way of an overriding gear, an electric steering actuator, a sensor for measuring the position of the steering wheels, and a steering control device,
**characterized in that** the steering control device includes a means for implementing the method as claimed in any one of the preceding claims.

**Revendications**

1. Procédé à diriger un véhicule comportant un système direction de superposition pour déterminer un angle direction entré par le conducteur et un autre angle (angle supplémentaire), l'angle direction entré étant superposé par l'angle supplémentaire par l'intermédiaire d'un moteur électrique dans la mesure des autres données, en particulier des conditions de marche dynamiques, **caractérisé en ce que** le procédé comporte un réglage d'angle direction prévu d'un réglage de courant ou de couple moteur électrique sous-posé.

2. Procédé selon la revendication 1, **caractérisé en ce qu'**une valeur réelle de l'angle direction et une valeur prescrite de l'angle direction sont déterminées et qu'une courant prescrite ou un couple moteur prescrit est produit dans la mesure d'une comparaison entre la valeur réelle et la valeur prescrite de l'angle direction, par l'intermédiaire duquel le moteur électrique introduit l'angle supplémentaire dans le système direction.

3. Procédé selon les revendications 1 ou 2, **caractérisé en ce qu'**une direction $\delta_{DRV}$ 52 désiré par le conducteur est déterminée sur la base d'un angle volant $\delta_H$ 50 ajusté par le conducteur, la direction $\delta_{DRV}$ 52 désirée par le conducteur étant formée par l'angle volant $\delta_H$ 50 et par un facteur de transmission fixe ou variable, le facteur de transmission étant choisi conforme à la situation de marche actuelle, en particulier à une vitesse longitudinale de véhicule déterminée et/ou un angle braquage du volant et qu'une valeur 53 $\delta_{soll}$ de l'angle direction est déterminée sur la base de la direction désirée par le conducteur et amené au réglage de direction.

4. Procédé selon l'une des revendications 1 à 3, **caractérisé en ce que** l'angle direction $\delta_H$ du conducteur est déterminé et en combinaison avec un facteur de transmission $i_{L2}$ par lequel l'angle direction du conducteur agit directement sur la transmission de direction, sera superposé de manière additive par un angle direction $\delta_M$ supplémentaire en combinaison avec une transmission $i_{L2}$ secondaire, et qu'un angle direction $\delta_L$ superposé sera déterminé et amené comme valeur réelle $\delta_{List}$ au réglage de direction, l'angle de direction $\delta_L$ superposé étant déterminé selon la relation suivante :

$$\delta_L = i_{L1} * \delta_H + i_{L2} * \delta_M$$

**5.** Procédé selon l'une des revendications 1 à 4, **caractérisé en ce qu'**un réglage dynamique de marche (système ESP) coopère avec le réglage direction, et qu'aussitôt que le réglage dynamique de marche reconnaisse la nécessité d'une opération stabilisante un angle direction $\Delta\delta$ 56 supplémentaire dépendant de la dynamique de marche sera déterminé.

**6.** Procédé selon la revendication 5, **caractérisé en ce que** l'angle $\Delta\delta$ 56 supplémentaire dépendant de la dynamique de marche et produit sur la base d'une opération corrigeante sera superposé de manière additive sur la direction $\delta_{DRV}$ 52 désirée par le conducteur.

**7.** Procédé selon l'une des revendications 1 à 6, **caractérisé en ce que** le moteur électrique dans la mesure des autres données est commandé supplémentairement par une courant d'affaiblissement de champs pour augmenter la vitesse du moteur sans réduire le couple moteur disponible.

**8.** Procédé selon la revendication 7, **caractérisé en ce que** le moteur électrique supplémentairement est commandé par une courant d'affaiblissement de champs si une transmission de direction très directe et / ou une grande vitesse nominale est désirée ou requise.

**9.** Procédé selon l'une des revendications 1 à 8, **caractérisé en ce qu'** en vertu de la transmission de direction série $i_{L,serie}$ et d'un facteur amplificateur K1 dépendant de l'angle volant et d'un facteur amplificateur K2 dépendant de la vitesse de véhicule une résultante transmission de direction $i_{L\ ESAS}$ correspondant au relation des roues $\delta_V$ dirigées à l'angle $\delta_H$ de direction du conducteur sera déterminée selon la relation suivante

$$i_{L,\ ESAS} = \delta_V/\delta_H = i_{L,\ série} / (K1*K2)$$

**10.** Procédé selon l'une des revendications 1 à 9, **caractérisé en ce qu'**une commande pilote de la vitesse nominale du moteur $\omega_{Msoll}$ est effectuée qui est déterminé d'une vitesse-moteur préréglée $\omega_{M,vor}$ et d'une vitesse-moteur nominale préréglée $\omega_{M,reg}$ la vitesse du moteur $\dot{\omega}_{M,reg}$ nominale préréglée étant déterminée sur la base d'une comparaison d'une valeur $\delta_{L,soll}$ de l'angle direction avec une valeur réelle $\delta_{H\ ist}$ de l'angle direction déterminé, la vitesse-moteur préréglée $\omega_{M,vor}$ étant déterminée de la dérivation en temps de la valeur nominale $\delta_L$, de l'angle direction et de l'angle $\delta_H$ direction du conducteur et d'un facteur de transmission $i_{L2}$ selon la relation suivante:

$$\omega_{M,\ vor} = (\dot{\delta}_{L,soll} - i_{L1}\ \dot{\delta}_H) / i_{L2}$$

**11.** Programme de calculateur électronique, **caractérisé en ce qu'**il est convenable pour accomplir un procédé selon l'une des revendications précédentes.

**12.** Direction pour une véhicule comportant un volant disposé à une colonne de direction, un mécanisme de direction, un capteur d'angle de rotation disposé sur la colonne de direction, un moteur de superposition agissant sur la colonne de direction par l'intermédiaire d'une transmission de superposition, un réglage direction électrique, un capteur à mesurer la position des roues dirigées et un dispositif de commande à diriger, **caractérisé en ce que** le dispositif de commande à diriger est prévu des moyens pour accomplir le procédé selon l'une des revendications précédentes.

Fig.1

Fig. 2

Fig. 3

Fig. 4

Fig. 5

Fig. 6

**EP 1 521 701 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19751125 A1